# EUROPEAN PATENT SPECIFICATION

(11) **EP 4 353 842 B1**
(45) Date of publication and mention of the grant of the patent: **22.10.2025**
(21) Application number: 22819989.9
(22) Date of filing: 12.05.2022
(51) Int. Cl.: C21C 7/00, C21C 7/10, C21C 7/06, C21C 7/072

(54) **MOLTEN STEEL DENITRIFICATION METHOD AND STEEL PRODUCTION METHOD**
VERFAHREN ZUR DENITRIFIKATION VON GESCHMOLZENEM STAHL UND STAHLHERSTELLUNGSVERFAHREN
PROCÉDÉ DE DÉNITRIFICATION D'ACIER FONDU ET PROCÉDÉ DE PRODUCTION D'ACIER

(30) Priority: 11.06.2021 JP 2021098118
(43) Date of publication of application: 17.04.2024
(73) Proprietor: JFE Steel Corporation, Tokyo 100-0011 (JP)
(72) Inventor: NEGISHI, Hidemitsu, Tokyo 100-0011 (JP); YAMADA, Rei, Tokyo 100-0011 (JP)
(74) Representative: Hoffmann Eitle
(86) International application number: PCT/JP2022/020007
(87) International publication number: WO 2022/259805

(56) References cited:
- CN-A- 108 396 094
- JP-A- 2007 211 298
- JP-A- H08 246 024
- JP-A- H08 246 024
- JP-A- H09 165 615
- JP-A- S61 272 313
- US-B2- 8 277 537

## Description

### Technical Field

The present invention relates to a method of removing nitrogen in molten steel charged in a reaction vessel, such as a ladle, through reactions among the molten steel, slag added and formed on top of the molten steel, and an oxygen-containing gas blown onto the slag, and to a production method of steel smelted by this method.

### Background Art

Nitrogen is a harmful component for metal materials. In a conventional steelmaking process, nitrogen [N] in molten iron is removed mainly by having it adsorbed onto the surfaces of air bubbles of carbon monoxide that is generated during a decarburization treatment of molten pig iron. Therefore, when it comes to molten steel with a low carbon concentration, due to the limited amount of carbon monoxide to be generated, a similar technique cannot remove nitrogen to a low concentration.

Meanwhile, to reduce CO₂ emissions, the steelmaking process needs to shift from a conventional method of using a blast furnace or a converter to a method of melting scrap or reduced iron. In that case, molten iron obtained has a low carbon concentration, which may make it impossible to smelt low-nitrogen steel for the above-described reason.

in this context, some methods of removing nitrogen from molten steel using slag have been proposed. For example, Patent Literature 1 shows a method in which an Al concentration in molten steel is held at a concentration of 0.7 mass% or higher in a VOD furnace for at least five minutes to form aluminum nitride (hereinafter "AlN") and thereby remove nitrogen.

Patent Literature 2 shows a method in which molten steel is smelted in an electric furnace using iron scrap as a main iron source, and after the molten steel is discharged into another refining vessel and held therein, a denitrification flux including an Al-containing substance is added to make the AlN transition to slag, and then an oxygen-containing gas is blown onto the molten steel to remove nitrogen.

Patent Literature 3 shows a method in which molten metal is charged into a refining vessel having a gas top-blowing function, and after the surface of this molten metal is covered with slag composed mainly of CaO and Al₂O₃, an oxidizing gas is blown onto the surface of this covering slag to such an extent that this gas does not directly contact the molten metal to thereby remove nitrogen. Patent Literature 4 further discloses a molten steel denitrification method.

### Citation List

### Patent Literature

Patent Literature 1: JP-H05-32073A3
Patent Literature 2: JP-2007-211298A
Patent Literature 3: JP-H08-246024
Patent Literature 4: US 8 277 537 B2

### Non-Patent Literature

Non-Patent Literature 1: Ueno et al.: Tetsu-to-Hagane (Iron and Steel), 101 (2015), 74

### Summary of Invention

### Technical Problem

However, these conventional technologies have the following problems.

The technologies described in Patent Literatures 1 and 2, which use the formation of AlN for denitrification, have a problem in that part of the AlN formed remains in the molten steel and constitutes a starting point of cracking during casting in a later step.

Moreover, smelting low-nitrogen steel with a nitrogen content in the order of a few tens of mass ppm by a denitrification method using the formation of AlN requires an Al concentration of at least about a few mass% to 10 mass%, with the solubility products of Al and N taken into account. Or effectively utilizing the denitrification reaction requires an initial nitrogen concentration in the order of a few hundred mass ppm. The problem is that the technologies described in Patent Literatures 1 and 2 are extremely costly for smelting low-nitrogen steel in terms of process and therefore applicable only to those types of steel that have large amounts of dissolved nitrogen, such as stainless steel.

As conditions for shielding the molten steel from the oxidizing gas, the technology described in Patent Literature 3 presents the following:
(1) Securing at least 15 kg of slag per ton of molten steel; and
(2) Controlling the amount of slag, the amount of bottom-blown gas, the composition and the flow rate of the top-blown gas, the lance height, the atmospheric pressure, etc. within appropriate ranges.

As for condition (1), the amount of slag increases according to the size of the vessel into which molten steel is charged. As for condition (2), specific control means and control ranges are not described, and a method for checking whether the molten steel is shielded from the gas is not clear. Thus, compatible conditions are ambiguous. The present inventors have confirmed that when a test is conducted using the same ranges as those in the compatible example described in Patent Literature 3, the denitrification speed becomes actually slow as the movement of nitrogen between the slag and the metal is restricted as a result of an increase in apparent oxygen partial pressure in the slag-metal interface due to the oxidizing gas, which makes this technology not practical for operation.

The present invention has been contrived in view of these circumstances, and an object thereof is to propose a molten steel denitrification method by which an extremely low nitrogen concentration range can be stably reached in a short time when performing a denitrification treatment of molten steel using slag. The present invention further proposes a steel production method that uses molten steel smelted by this molten steel denitrification method.

### Solution to Problem

As a result of vigorously conducting studies in view of the above-described problems, the present inventors have found that, to achieve a high denitrification speed in a denitrification treatment of blowing an oxygen-containing gas onto slag and removing nitrogen in molten steel through the slag, it is necessary to reduce the T.Fe concentration in the slag after the treatment to or below a certain value.

A molten steel denitrification method according to the present invention that advantageously solves the above-described problems is a molten steel denitrification method in which CaO-and-Al₂O₃-containing slag is formed by a combination of an Al addition step of adding a metal-Al-containing substance to molten steel to deoxidize and turn the molten steel into Al-containing molten steel and a CaO addition step of adding a CaO-containing substance to the molten steel, and then an oxygen-containing gas is blown from above the slag to perform a denitrification treatment, characterized in that T.Fe in the slag after the denitrification treatment is set to 3.0 mass% or lower.

Molten steel denitrification methods according to the present invention in which the following apply could be more preferable solutions:
(a) that, in the denitrification treatment, the oxygen-containing gas is supplied such that a ratio Lₛ/Lₛ₀ between a thickness Lₛ₀ of the slag and a depth Lₛ of a depression in the slag resulting from blowing of the oxygen-containing gas becomes 0.9 or lower;
(b) that, in the denitrification treatment, the oxygen-containing gas is an O₂ gas diluted with an inert gas other than an N₂ gas;
(c) that, in the Al addition step, an Al concentration [Al] in the molten steel is set to between 0.1 mass% and 1.0 mass%, both inclusive;
(d) that, in the denitrification treatment, surfaces of the Al-containing molten steel and the slag are subjected to a depressurized atmosphere; and
(e) that a temperature T_{f} of the molten steel undergoing the denitrification treatment is increased by 5°C or more each time an MgO concentration (MgO) in the slag increases by 1.0 mass%.

A steel production method according to the present invention that advantageously solves the above-described problems is characterized in that molten steel smelted by any one of the above-described molten steel denitrification methods is cast after its components are arbitrarily adjusted.

### Advantageous Effects of Invention

The present invention makes it possible to stably remove nitrogen to an extremely low nitrogen concentration range in a short time when performing a denitrification treatment of molten steel using slag.

### Brief Description of Drawings

FIG. 1 is a schematic view showing one example of a device suitable for a molten steel denitrification method according to one embodiment of the present invention.
FIG. 2 is a graph showing a relationship between a total iron concentration (T.Fe)_{f} in slag after a denitrification treatment and a reached nitrogen concentration [N]_{f} in molten steel.
FIG. 3 is graphs showing X-ray diffraction analysis results of slags after a denitrification treatment, with (a) representing slag in the case of the reached nitrogen concentration [N]_{f} in molten steel > 35 mass ppm, and (b) representing slag in the case of the reached nitrogen concentration [N]_{f} in molten steel ≤ 35 mass ppm.
FIG. 4 is a graph showing a relationship between a ratio Lₛ/Lₛ₀ between an initial slag thickness Lₛ₀ and a depth Lₛ of a depression in the slag due to an oxygen-containing gas and the total iron concentration (T.Fe)_{f} in the slag after a denitrification treatment.
FIG. 5 is a graph showing an influence of the type of oxygen-containing gas on the relationship between the ratio Lₛ/Lₛ₀ between the initial slag thickness Lₛ₀ and the depth Lₛ of the depression in the slag due to the oxygen-containing gas and the reached nitrogen concentration [N]_{f} in the molten steel.
FIG. 6 is a graph showing an influence of the type of oxygen-containing gas on a relationship between the ratio Lₛ/Lₛ₀ between the initial slag thickness Lₛ₀ and the depth Lₛ of the depression in the slag due to the oxygen-containing gas and an Al concentration [Al]ₑ in the molten steel to be secured.
FIG. 7 is a graph showing an influence of the type of oxygen-containing gas on a relationship between a furnace internal pressure P and an upper limit Max [N]_{f} of variation in the reached nitrogen concentration in the molten steel.
FIG. 8 is a graph showing a relationship between an MgO concentration (MgO) in the slag and a molten steel temperature T_{f} for obtaining the same reached nitrogen concentration.

### Description of Embodiments

Embodiments of the present invention will be specifically described below. The drawings are schematic and may differ from the reality. The following embodiments illustrate a device and a method for embodying the technical idea of the present invention, and are not intended to restrict the configuration to the one described below. Thus, various changes can be made to the technical idea of the present invention within the technical scope described in the claims.

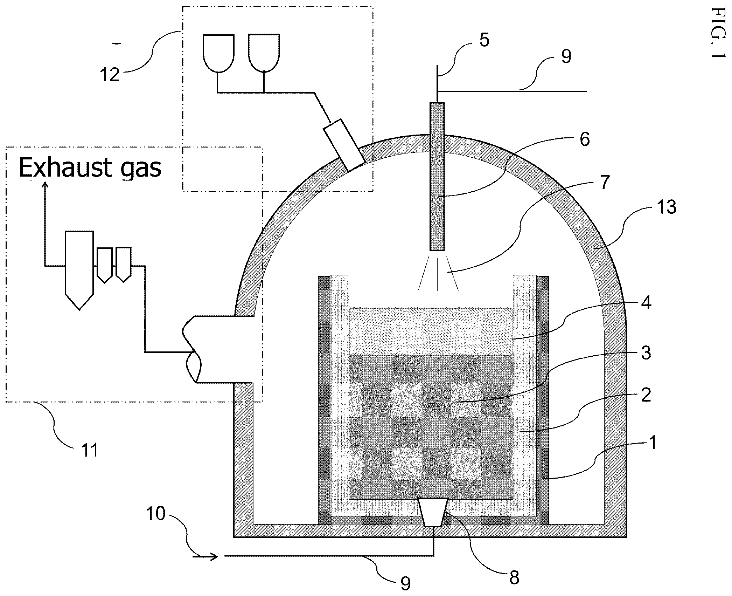

FIG. 1 shows a device configuration suitable to implement the present invention. Molten steel 3 is charged into a vessel 1, such as a ladle, that is lined with a refractory 2, and slag 4 containing CaO and Al₂O₃ is formed on top of this molten steel 3. In a state where surfaces of the molten steel 3 and the slag 4 are subjected to a depressurized atmosphere inside a vacuum vessel 13 having an exhaust system 11 and an alloy addition system 12, an oxygen-containing gas is blown onto the slag 4 through a gas top-blowing lance 6 that is connected to a gas pipe 5 for supplying an oxygen gas and a gas pipe 9 for supplying an inert gas. The molten steel 3 is stirred as a stirring inert gas 10 is blown in through a bottom-blowing nozzle 8 connected to the gas pipe 9. As the stirring inert gas 10, for example, an Ar gas not including a nitrogen gas is preferable.

A step of adding a metal-Al-containing substance to the molten steel 3 to deoxidize the molten steel 3 and turn it into Al-containing molten steel (Al addition step) and a step of adding a CaO-containing substance to the molten steel 3 (CaO addition step) may be performed using the alloy addition system 12 or may be performed in a step before entering the vacuum vessel 13. The step of deoxidizing the molten steel 3 (deoxidation step) may be performed separately from the Al addition step. The CaO addition step can be performed at an arbitrary timing. Performing the CaO addition step after the deoxidation step is preferable, because then the temperature rise of the molten steel due to the deoxidation reaction can be used to flux the slag. Performing the CaO addition step after the Al addition step is further preferable, because this can reduce deoxidation failure or variation in the slag composition due to the added Al-containing substance being hindered by the thick slag from reaching the molten steel.

To form the CaO-and-Al₂O₃-containing slag 4, Al₂O₃ resulting from adding the CaO-containing substance and deoxidizing the molten steel is used. This may be done using, as the CaO-containing substance, for example, calcium aluminate that is a pre-melted or pre-mixed product. As for the slag composition, a higher melting ratio (fluxing ratio) of the slag is more advantageous for the denitrification reaction, and a mass ratio C/A between CaO and Al₂O₃ is preferably within a range of 0.4 to 1.8 and more preferably within a range of 0.7 to 1.7.

The form of supplying the stirring gas 10 into the molten steel may be, other than the above-described method, for example, a form of injecting it into the molten steel through an injection lance for blowing in an inert gas.

Next, preferred embodiments of the present invention will be described in detail along with how they were developed.

### (First Embodiment)

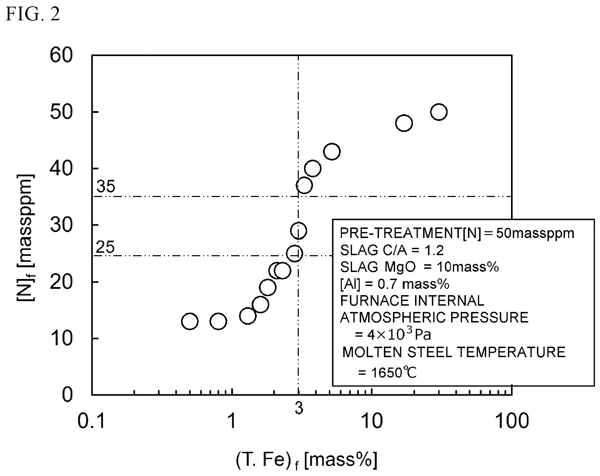

A first embodiment was devised out of necessity to clearly and quantitatively present conditions advantageous for denitrification, for, even when a test was conducted within the range of the compatible example in Patent Literature 3, denitrification was not stable and the reached nitrogen concentration was not reduced, either. In a small-sized high-frequency vacuum induction melting furnace satisfying the configuration requirements of FIG. 1, the CaO- and-Al₂O₃-containing slag 4 was formed at a ratio of 15 kg/t or higher relative to 15 kg of the molten steel 3, in such an amount that the surface of the molten steel was not recognizable to the naked eye, and an O₂ gas was blown onto the slag. As a result, the present inventors have found that, as shown in FIG. 2, the reached nitrogen concentration decreases rapidly when a T.Fe concentration (T.Fe) that is a total iron concentration in the slag after the treatment reaches 3.0 mass%. In this case, a furnace internal atmospheric pressure P was 4 × 10³ Pa; an initial nitrogen concentration [N]ᵢ in the molten steel was 50 mass ppm; an Al concentration [Al] was 0.7 mass%; the slag composition had a mass ratio C/A between CaO and Al₂O₃ of 1.2; an MgO concentration (MgO) in the slag was 10 mass%; a molten steel temperature T_{f} was 1650°C; and a treatment time t was 30 minutes.

Of the tests described above, in a test in which the T.Fe concentration (T.Fe) in the slag was 15 mass% or higher, it was clearly recognizable with the naked eye that the oxygen gas had penetrated through the slag layer and exposed the surface of the molten steel. By contrast, in a test in which the T.Fe concentration was lower than 15%, clear exposure of the surface of the molten steel was not recognized at any locations including the surface onto which the oxygen gas was blown. Thus, removing nitrogen to a low nitrogen concentration range in accordance with what was described in Patent Literature 3 proved difficult. The result of the study as just described led to the development of the first embodiment, i.e., a molten steel denitrification method in which CaO-and-Al₂O₃-containing slag is formed by a combination of an Al addition step of adding a metal-Al-containing substance to molten steel to deoxidize and turn the molten steel into Al-containing molten steel and a CaO addition step of adding a CaO-containing substance to the molten steel, and then an oxygen-containing gas is blown from above the slag to perform a denitrification treatment, wherein T.Fe in the slag after the denitrification treatment is set to 3.0 mass% or lower. The lower limit of T.Fe in the slag may be 0 mass%. In this Description, [M] represents a state of element M being dissolved and contained in molten steel, and (R) represents a state of a chemical substance R being dissolved and contained in slag. Units are added to express their respective composition ratios.

### (Second Embodiment)

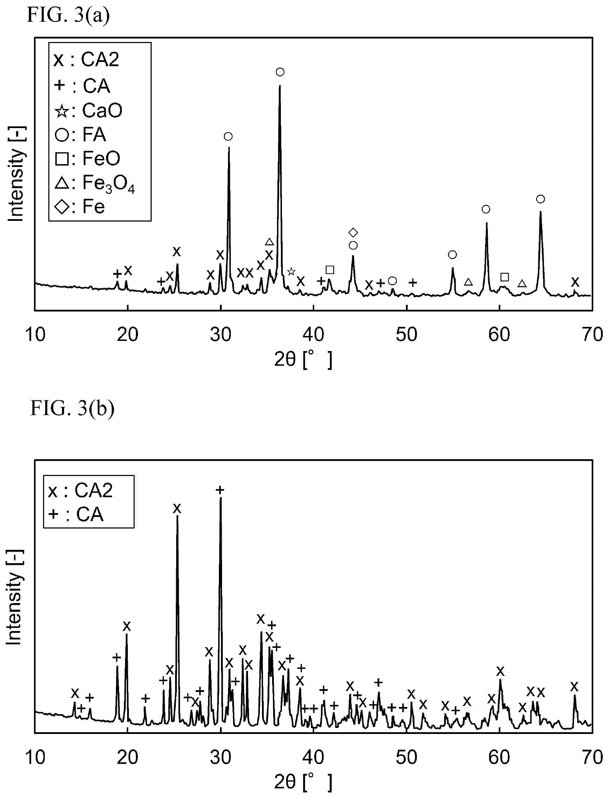

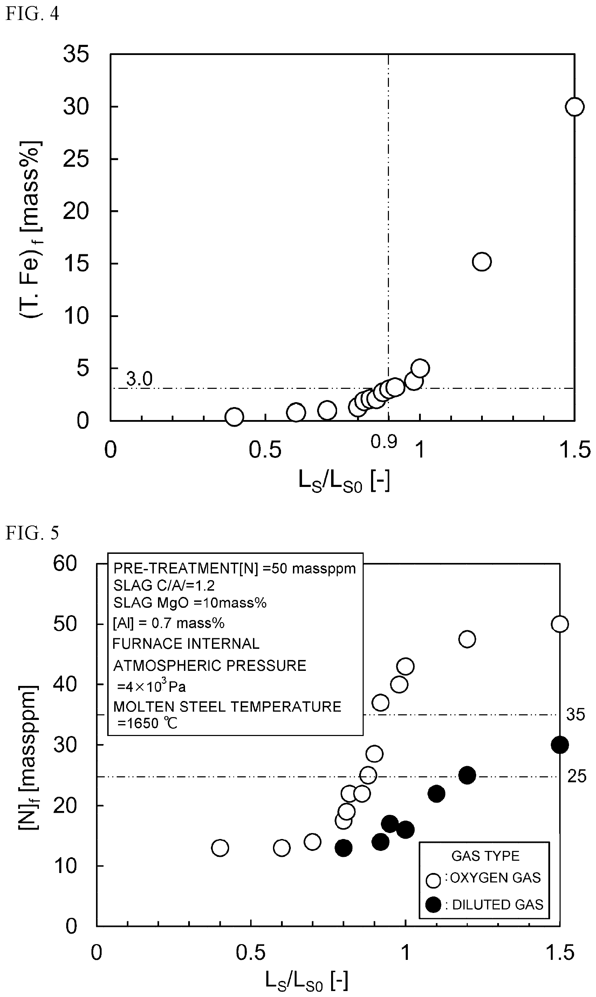

A second embodiment was found in the course of conducting tests in the aforementioned small-sized high-frequency vacuum induction melting furnace to address the challenge of how to control the T.Fe concentration (T.Fe) in the slag after the denitrification treatment to 3.0 mass% or lower. First, an X-ray diffraction (XRD) analysis was performed on each of slags after the denitrification treatment, respectively obtained in a test in which the oxygen gas clearly penetrated through the slag layer and the nitrogen concentration [N] in the molten steel after the treatment was higher than 35 mass ppm, and a test in which the surface of the molten steel was not exposed during the test and the concentration decreased to 35 mass ppm or lower. As a result, as shown in FIG. 3, in the slag from the test in which the oxygen gas clearly penetrated through the slag layer (FIG. 3 (a)), peaks of ferrioxides (FeO, Fe₃O₄, and ferrite-alumina (FA)) and iron (Fe) itself were recognized with high intensities. By contrast, in the slag from the test in which the reached nitrogen concentration [N]_{f} decreased sufficiently (FIG. 3 (b)), peaks of ferrioxides and iron were absent or weak, and only peaks of calcium aluminates (CA and CA2) were observed. Following this result, the present inventors studied a relationship between the T.Fe concentration (T.Fe)_{f} (mass%) in the slag after the denitrification treatment and Lₛ/Lₛ₀ (-) that is a ratio between a measurement result of a slag thickness Lₛ₀ (m) at a stage where the CaO-and-Al₂O₃-containing slag has melted before the denitrification treatment and a depth Lₛ (m) of a depression in the slag resulting when parameters in the formula described in Non-Patent Literature 1, namely the liquid density, the gas density, the jet speed, etc., are changed to values complying with experimental conditions. As a result, as shown in FIG. 4, it was found that the T.Fe concentration (T.Fe)_{f} in the slag could be stably controlled to 3.0 mass% or lower when Lₛ/Lₛ₀ was set to 0.9 or lower. In this case, the furnace internal atmospheric pressure P was 4 × 10³ Pa; the initial nitrogen concentration [N]ᵢ in the molten steel was 50 mass ppm; the Al concentration [Al] was 0.7 mass%; the slag composition had a mass ratio C/A between CaO and Al₂O₃ of 1.2; the MgO concentration (MgO) in the slag was 10 mass%; the molten steel temperature T_{f} was 1650°C; and the treatment time t was 30 minutes. The result of the study as just described led to the development of the second embodiment, i.e., a molten steel denitrification method in which, in addition to the above-described first embodiment, in the denitrification treatment, the oxygen-containing gas is supplied such that the ratio Lₛ/Lₛ₀ between the thickness Lₛ₀ of the slag and the depth Lₛ of the depression in the slag resulting from blowing of the oxygen-containing gas becomes 0.9 or lower. While the lower limit of Lₛ/Lₛ₀ is not particularly limited, it is preferably 0.1 or higher from the viewpoint of effectively blowing the oxygen-containing gas.

To control the ratio Lₛ/Lₛ₀ of the slag depression depth, a method of increasing or decreasing the lance height or the gas flow rate, appropriately shaping the nozzle tip of the gas top-blowing lance, and various other methods can be adopted. The present inventors have confirmed that if, for example, the value of Lₛ/Lₛ₀ when the lance height is changed and the value of Lₛ/Lₛ₀ when the gas flow rate is changed are the same, the T.Fe concentrations (T.Fe)_{f} in the slag are equivalent, and that no difference due to the difference in control means occurs. Depending on the scale of the device, the thickness of the slag being treated can decrease for reasons such as part of the slag infiltrating into the refractory or the slag getting involved into the molten steel as the molten steel is stirred. However, the upper limit value of the ratio Lₛ/Lₛ₀ of the slag depression depth should be adjusted to be lower than 0.9 as appropriate based on this technical idea.

### (Third Embodiment)

A third embodiment was found in the course of conducting studies to make the present invention applicable also to a facility in which it is difficult to control the T.Fe concentration in the slag through the ratio Lₛ/Lₛ₀ of the slag depression depth for some reason, such as ascending and descending of the top-blowing lance being controlled stepwise. Specifically, this embodiment involves reducing the oxygen gas concentration in the oxygen-containing gas. In a test using the aforementioned small-sized high-frequency vacuum induction furnace, a denitrification treatment was performed while an inert gas was supplied through the gas pipe 9 to reduce the oxygen concentration in the gas blown onto the slag from 1.5 mass% (industrial crude Ar level) to 0.1 mass ppm (industrial Ar level). Here, as the inert gas, a gas that does not include nitrogen is used. As a result, as shown in FIG. 5, blowing the diluted gas allowed the reached nitrogen concentration [N]_{f} to be made equal to or lower than 35 mass ppm even under the condition where the ratio Lₛ/Lₛ₀ of the slag depression depth was higher than 0.9. In this case, the furnace internal atmospheric pressure P, the initial nitrogen concentration [N]ᵢ in the molten steel, the Al concentration [Al], C/A in the slag composition, the MgO concentration (MgO) in the slag, the molten steel temperature T_{f}, and the treatment time t were the same as in the above-described first embodiment. While the cause is not clearly known, possible explanations include that, in denitrification from a slag phase to a gas phase, a chemical reaction speed can be secured even at a sufficiently low oxygen partial pressure, and that a rate-limiting process in the denitrification reaction from molten steel to a gas phase through the slag constitutes a rate-limiting factor in mass transfer of nitrogen on the slag side or the metal side or both sides instead of a chemical reaction speed. The result of the study as just described led to the development of the third embodiment, i.e., a molten steel denitrification method in which, in addition to the above-described first embodiment or second embodiment, in the denitrification treatment, the oxygen-containing gas is an O₂ gas diluted with an inert gas other than an N₂ gas.

### (Fourth Embodiment)

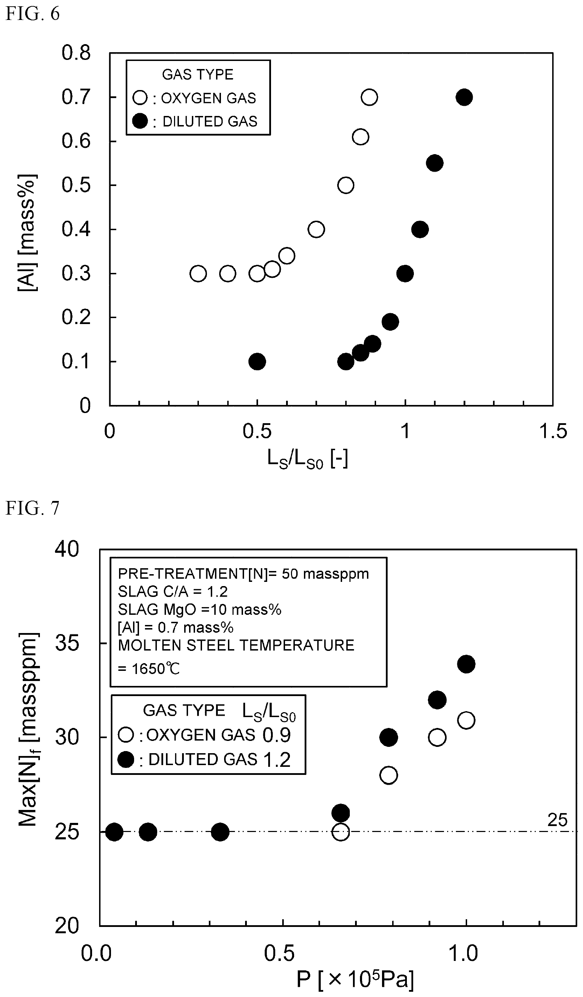

Patent Literature 3 requires an Al concentration [Al] in molten steel of 0.3 mass% to 2 mass% as a concentration needed to increase the ratio of nitrogen distribution between slag and metal, which makes it costly to smelt ordinary steel. A fourth embodiment was found in the course of exploring the possibilities of removing nitrogen with the Al concentration [Al] in the molten steel reduced to an even lower concentration to solve this problem. In the aforementioned small-sized high-frequency vacuum induction melting furnace, a minimum required Al concentration [Al]ₑ for reducing the nitrogen [N]_{f} in molten steel to 25 mass ppm was studied. As a result, as shown in FIG. 6, it was found that the required Al concentration [Al]ₑ tended to decrease according to the ratio Lₛ/Lₛ₀ (-) of the slag depression depth, and that, when the diluted oxygen gas (with an oxygen concentration in the gas 0.1 ppm to 1.5 mass%) described in the third embodiment was blown onto the CaO-and-Al₂O₃-containing slag, the required Al concentration [Al]ₑ in the molten steel was lower than when the oxygen gas was blown at the same ratio Lₛ/Lₛ₀ (-) of the slag depression depth. Here, as the test conditions, the furnace atmospheric pressure P was 4 × 10³ Pa; the initial nitrogen concentration [N]ᵢ in the molten steel was 50 mass ppm; C/A in the slag composition was 1.2; the MgO concentration (MgO) in the slag was 10 mass%; the molten steel temperature was 1650°C; and the treatment time was 30 minutes. This may be because, in the case of a gas containing a considerable amount of oxygen, the increased apparent oxygen activity in the slag-metal interface leads to a lower denitrification speed. Then, to make up for this decrease, it would be necessary to add Al and thereby reduce the oxygen activity accordingly. The minimum Al concentration [Al]ₑ required to achieve a nitrogen concentration [N]_{f} in the molten steel of 25 mass ppm was 0.3 mass% in the case of blowing the oxygen gas and 0.1 mass% in the case of blowing the diluted oxygen gas. The result of the study as just described led to the development of the fourth embodiment, i.e., a molten steel denitrification method in which, in addition to any one of the first to third embodiments, in the Al addition step of adding a metal-Al-containing substance to the molten steel to turn it into Al-containing molten steel, the Al concentration [Al] in the molten steel is set to between 0.1 mass% and 1.0 mass%, both inclusive.

### (Fifth Embodiment)

A fifth embodiment was found in the course of studying an influence that a reached degree of vacuum P inside the vacuum vessel exerted on the reached nitrogen concentration [N]_{f}. In the aforementioned small-sized high-frequency vacuum induction melting furnace, the reached nitrogen concentration [N]_{f} was studied by performing a denitrification treatment several times at different timings, with the ratio Lₛ/Lₛ₀ of the slag depression depth set to 0.9 in the case where the gas blown onto the CaO-and-Al₂O₃-containing slag was an oxygen gas and with the ratio Lₛ/Lₛ₀ of the slag depression depth set to 1.2 in the case of a diluted gas (with an oxygen concentration in the gas 0.1 ppm to 1.5 mass%). As a result, as shown in FIG. 7, when a low degree of vacuum was exceeded, i.e., when the furnace internal pressure P exceeded 0.67 × 10⁵ Pa, the variation in the reached nitrogen concentration became wider and a reached nitrogen concentration Max [N]_{f} that is the upper limit of the variation exhibited an increasing tendency. Here, the initial nitrogen concentration [N]ᵢ in the molten steel, the Al concentration [Al] in the molten steel, C/A in the slag composition, the MgO concentration (MgO) in the slag, the molten steel temperature, and the treatment time were the same as in the first embodiment. Considering that the reached nitrogen concentration [N]_{f} as the lower limit of the variation remained at 25 mass ppm, nitrogen in the atmosphere may have returned into the molten steel when the molten steel surface was exposed for some reason. Also at an atmospheric pressure (10⁵ Pa) without depressurization, the nitrogen concentration [N] in the molten steel is 35 mass ppm or lower and thus a low nitrogen concentration range is reached. In the case of the facility configuration of FIG. 1, the atmospheric pressure becomes higher than outside air by a few percent due to the influences of a temperature rise inside the enclosed space and the top-blowing oxygen-containing gas. In the case where return of nitrogen needs to be restricted, the surfaces of the slag and the molten steel should be preferably depressurized to 0.67 × 10⁵ Pa or lower and further preferably to 0.33 × 10⁵ Pa or lower. The result of the study as just described led to the development of the fifth embodiment, i.e., a molten steel denitrification method in which, in addition to any one of the first to fourth embodiments, in the denitrification treatment, the surfaces of the Al-containing molten steel and the slag are subjected to a depressurized atmosphere. Since excessive depressurization causes an increase in facility costs of the exhaust system etc., the lower limit of the furnace atmospheric pressure P is preferably about 10³ Pa.

### (Sixth Embodiment)

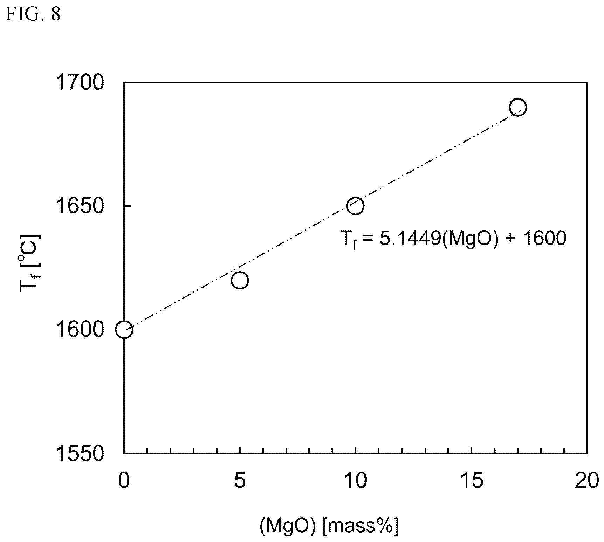

A sixth embodiment was found in the course of studying an influence of the MgO concentration (MgO) in the CaO-and-Al₂O₃-containing slag. Using the aforementioned small-sized high-frequency vacuum induction melting furnace, a study was conducted on a molten steel temperature T_{f} that was required to reduce the nitrogen [N]_{f} in the molten steel to 25 mass ppm when the MgO concentration (MgO) in the CaO-and-Al₂O₃-containing slag was changed over a range of 0 mass% to a saturated concentration. As a result, as shown in FIG. 8, the molten steel temperature needed to be raised by about 5°C each time the MgO concentration in the slag was increased by 1.0 mass%. As preconditions for the study, the furnace atmospheric pressure P was 4 × 10³ Pa; the Al concentration [Al] was 0.7 mass%; the initial nitrogen concentration [N]ᵢ was 50 mass ppm; C/A in the slag composition was 1.2; the type of gas blown was an oxygen gas; the ratio Lₛ/Lₛ₀ of the slag depression depth was 0.8 to 0.9; and the treatment time t was 30 minutes. This study has quantitatively revealed the amount of increase in the molten steel temperature that can recover a decrease in the denitrification reaction due to an increase in the MgO concentration. The result of the study as just described led to the development of the sixth embodiment, i.e., a molten steel denitrification method in which, in addition to any one of the first to fifth embodiments, the temperature T_{f} of the molten steel is increased by 5°C or more each time the MgO concentration (MgO) in the slag increases by 1.0 mass%. It is preferable that a molten steel temperature after the denitrification treatment be used as the molten steel temperature T_{f}, and that the denitrification treatment be completed at 1600°C or higher, although it depends on a casting step that is a later step and a transfer time.

### (Steel Production Method)

It is preferable that molten steel smelted by the above-described molten steel denitrification method be cast after additionally it is adjusted to a predetermined composition and form control and floating separation of inclusions are performed as necessary. It is possible to produce high-grade steel which is low-nitrogen steel and of which various components have been adjusted.

### Examples

In the following, examples of the present invention will be described in detail. Using the device having the configuration of FIG. 1, metal Al was added to molten steel at 1600°C to 1750°C inside a ladle to set the Al concentration in the molten steel to 0.1 to 1.0 mass%. CaO and refractory-protecting MgO were added to form CaO-Al₂O₃ binary slag or CaO-Al₂O₃-MgO ternary slag. Then, an oxygen gas or a diluted oxygen-containing gas (diluted to an oxygen concentration in the gas of 0.1 ppm to 1.5%) was blown onto the slag. An Ar gas was supplied to the molten steel through a bottom-blowing plug mounted at a lower part of the ladle at a stirring power density of 500 to 1000 kW/t. The test was conducted using an amount of molten steel of 160 t.

Table 1 shows the test conditions and the results. Treatments No. 1 to 7 in which the T.Fe concentration (T.Fe) in the slag is sufficiently low produced good results with the N concentration [N]_{f} after the treatment being 35 mass ppm or lower. By contrast, in treatment No. 8 in which T.Fe concentration (T.Fe) in the slag is high, denitrification in same treatment time was insufficient.

**[Table 1]**

| No. | Slag | | | Gas type | L_{S} / L_{S0} | [Al] | P | Tf | [N]i | [N]f | t | Remarks |
|---|---|---|---|---|---|---|---|---|---|---|---|---|
| | (T.Fe)f | (C/A)* | (MgO) | | | | | | | | | |
| | mass% | - | mass% | | - | mass% | 10⁵ Pa | °C | massppm | massppm | min | |
| 1 | 2.9 | 0.67 | 0 | Oxygen | 0.9 | 0.08 | 1.0 | 1600 | 50 | 35 | 30 | Invention Example |
| 2 | 0.5 | 1.0 | 5 | Oxygen | 0.6 | 0.9 | 1.0 | 1620 | 50 | 34 | 30 | Invention Example |
| 3 | 1.0 | 1.0 | 5 | Diluted | 1.0 | 0.09 | 1.0 | 1624 | 50 | 30 | 30 | Invention Example |
| 4 | 0.5 | 0.67 | 10 | Oxygen | 0.5 | 0.28 | 1.0 | 1600 | 50 | 24 | 30 | Invention Example |
| 5 | 0.8 | 0.67 | 10 | Oxygen | 0.6 | 0.5 | 1.0 | 1645 | 50 | 20 | 30 | Invention Example |
| 6 | 0.5 | 1.0 | 10 | Oxygen | 0.5 | 0.3 | 0.04 | 1600 | 50 | 16 | 30 | Invention Example |
| 7 | 0.9 | 0.67 | 10 | Diluted | 0.9 | 0.1 | 0.04 | 1660 | 50 | 13 | 30 | Invention Example |
| 8 | 29 | 0.67 | 0 | Oxygen | 1.5 | 0.08 | 1.0 | 1600 | 50 | 50 | 30 | Comparative Example |

### Industrial Applicability

When applied to a steelmaking process of producing molten steel by melting low-carbon scrap or reduced iron in an electric furnace etc., the molten steel denitrification method according to the present invention can stably mass-produce low-nitrogen steel. Thus, this method contributes to reducing CO₂ and is industrially useful.

### Reference Signs List

- 1: Vessel
- 2: Refractory
- 3: Molten steel
- 4: CaO-and-Al₂O₃-containing slag
- 5: Gas pipe (oxygen gas)
- 6: Gas top-blowing lance
- 7: Oxygen-containing gas
- 8: Bottom-blowing nozzle
- 9: Gas pipe (inert gas)
- 10: Stirring inert gas
- 11: Exhaust system
- 12: Alloy addition system
- 13: Vacuum vessel

## Claims

1. A molten steel denitrification method in which CaO-and-Al₂O₃-containing slag is formed by a combination of an Al addition step of adding a metal-Al-containing substance to molten steel to deoxidize and turn the molten steel into Al-containing molten steel and a CaO addition step of adding a CaO-containing substance to the molten steel, and then an oxygen-containing gas is blown from above the slag to perform a denitrification treatment,
**characterized in that** T.Fe in the slag after the denitrification treatment is set to 3.0 mass% or lower.

2. The molten steel denitrification method according to claim 1, wherein, in the denitrification treatment, the oxygen-containing gas is supplied such that a ratio Lₛ/Lₛ₀ between a thickness Lₛ₀ of the slag and a depth Lₛ of a depression in the slag resulting from blowing of the oxygen-containing gas becomes 0.9 or lower.

3. The molten steel denitrification method according to claim 1 or 2, wherein, in the denitrification treatment, the oxygen-containing gas is an O₂ gas diluted with an inert gas other than an N₂ gas.

4. The molten steel denitrification method according to any one of claims 1 to 3, wherein, in the Al addition step, an Al concentration [Al] in the molten steel is set to between 0.1 mass% and 1.0 mass%, both inclusive.

5. The molten steel denitrification method according to any one of claims 1 to 4, wherein, in the denitrification treatment, surfaces of the Al-containing molten steel and the slag are subjected to a depressurized atmosphere.

6. The molten steel denitrification method according to any one of claims 1 to 5, wherein a temperature T_{f} of the molten steel undergoing the denitrification treatment is increased by 5°C or more each time an MgO concentration (MgO) in the slag increases by 1.0 mass%.

7. A steel production method **characterized in that** molten steel smelted by the molten steel denitrification method according to any one of claims 1 to 6 is cast after components are arbitrarily adjusted.

## Patentansprüche

1. Verfahren zur Entstickung einer Stahlschmelze, bei dem CaO- und Al₂O₃-haltige Schlacke durch Kombination eines Al-Zugabeschritts zum Zugeben einer metallisches Al enthaltenden Substanz zu einer Stahlschmelze, um die Stahlschmelze zu desoxidieren und die Stahlschmelze in eine Al-haltige Stahlschmelze umzuwandeln, und eines CaO-Zugabeschritts zum Zugeben einer CaO-haltigen Substanz zur Stahlschmelze gebildet wird und dann ein sauerstoffhaltiges Gas von oberhalb der Schlacke eingeblasen wird, um eine Entstickungsbehandlung durchzuführen,
**dadurch gekennzeichnet, dass** T.Fe in der Schlacke nach der Entstickungsbehandlung auf 3,0 Masse-% oder niedriger eingestellt wird.

2. Verfahren zur Entstickung einer Stahlschmelze gemäß Anspruch 1, wobei in der Entstickungsbehandlung das sauerstoffhaltige Gas so zugeführt wird, dass ein Verhältnis Lₛ/Lₛ₀ zwischen einer Dicke Lₛ₀ der Schlacke und einer Tiefe Lₛ einer Vertiefung in der Schlacke, die sich aus dem Einblasen des sauerstoffhaltigen Gases ergibt, 0,9 oder niedriger ist.

3. Verfahren zur Entstickung einer Stahlschmelze gemäß Anspruch 1 oder 2, wobei in der Entstickungsbehandlung das sauerstoffhaltige Gas ein O₂-Gas ist, das mit einem anderen Inertgas als N₂-Gas verdünnt ist.

4. Verfahren zur Entstickung einer Stahlschmelze gemäß einem der Ansprüche 1 bis 3, wobei in dem Al-Zugabeschritt eine Al-Konzentration [Al] in der Stahlschmelze zwischen 0,1 Masse-% und 1,0 Masse-% jeweils einschließlich eingestellt wird.

5. Verfahren zur Entstickung einer Stahlschmelze gemäß einem der Ansprüche 1 bis 4, wobei in der Entstickungsbehandlung Oberflächen der Al-haltigen Stahlschmelze und der Schlacke einer drucklosen Atmosphäre ausgesetzt werden.

6. Verfahren zur Entstickung einer Stahlschmelze gemäß einem der Ansprüche 1 bis 5, wobei eine Temperatur T_{f} der Stahlschmelze, die der Entstickungsbehandlung unterzogen wird, jedes Mal um 5°C oder mehr erhöht wird, wenn die MgO-Konzentration (MgO) in der Schlacke um 1,0 Masse-% zunimmt.

7. Stahlherstellungsverfahren, **dadurch gekennzeichnet, dass** eine Stahlschmelze, die durch das Verfahren zur Entstickung einer Stahlschmelze gemäß einem der Ansprüche 1 bis 6 geschmolzen wurde, gegossen wird, nachdem die Komponenten beliebig eingestellt wurden.

## Revendications

1. Procédé de dénitrification d'acier fondu dans lequel un laitier contenant du CaO et de l'Al₂O₃ est formé par combinaison d'une étape d'addition d'Al destinée à ajouter une substance contenant de l'Al métallique à l'acier fondu pour désoxyder l'acier fondu et obtenir de l'acier fondu contenant de l'Al et d'une étape d'addition de CaO destinée à ajouter une substance contenant du CaO à l'acier fondu, puis un gaz contenant de l'oxygène est pulvérisé depuis le dessus du laitier pour réaliser un traitement de dénitrification,
**caractérisé en ce que** le T.Fe dans le laitier après le traitement de dénitrification est réglé de manière à être égal ou inférieur à 3,0 % en masse.

2. Procédé de dénitrification d'acier fondu selon la revendication 1, dans lequel, dans le traitement de dénitrification, le gaz contenant de l'oxygène est alimenté de telle sorte qu'un rapport Lₛ/Lₛ₀ entre une épaisseur Lₛ₀ du laitier et une profondeur Lₛ d'un creux dans le laitier résultant de la pulvérisation du gaz contenant de l'oxygène devienne égal ou inférieur à 0,9.

3. Procédé de dénitrification d'acier fondu selon la revendication 1 ou la revendication 2, dans lequel, dans le traitement de dénitrification, le gaz contenant de l'oxygène est un gaz O₂ dilué avec un gaz inerte autre qu'un gaz N₂.

4. Procédé de dénitrification d'acier fondu selon l'une quelconque des revendications 1 à 3, dans lequel, dans l'étape d'ajout d'Al, une concentration en Al [Al] dans l'acier fondu est réglée entre 0,1 % en masse et 1,0 % en masse, les deux valeurs étant incluses.

5. Procédé de dénitrification d'acier fondu selon l'une quelconque des revendications 1 à 4, dans lequel, dans le traitement de dénitrification, les surfaces de l'acier fondu contenant de l'Al et du laitier sont soumises à une atmosphère dépressurisée.

6. Procédé de dénitrification d'acier fondu selon l'une quelconque des revendications 1 à 5, dans lequel une température T_{f} de l'acier fondu soumis au traitement de dénitrification est augmentée de 5°C ou plus à chaque fois qu'une concentration en MgO (MgO) dans le laitier augmente de 1,0 % en masse.

7. Procédé de production d'acier **caractérisé en ce que** l'acier fondu qui a été fondu par le procédé de dénitrification d'acier fondu selon l'une quelconque des revendications 1 à 6 est coulé après que les composants sont ajustés de manière arbitraire.
